# FASCICULE DE BREVET EUROPEEN

(11) **EP 1 472 132 B1**
(45) Date de publication et mention de la délivrance du brevet: **07.11.2007**
(21) Numéro de dépôt: 03717381.2
(22) Date de dépôt: 07.02.2003
(51) Int. Cl.: B62D 21/15

(54) **STRUCTURE POUR VEHICULE AUTOMOBILE ET VEHICULE EQUIPE D' UNE TELLE STRUCTURE**
FAHRZEUGSTRUKTUR, UND FAHRZEUG MIT DERARTIGEN STUKTUR
STRUCTURE FOR MOTOR VEHICLE AND VEHICLE EQUIPPED WITH SAME

(30) Priorité: 08.02.2002 FR 0201556
(43) Date de publication de la demande: 03.11.2004
(73) Titulaire: RENAULT S.A.S., 92100 Boulogne Billancourt (FR)
(72) Inventeur: LAVILLUNIERE, Vincent, F-95220 Herblay (FR)
(86) Numéro de dépôt international: PCT/FR2003/000384
(87) Numéro de publication internationale: WO 2003/066416

(56) Documents cités:
- EP-A- 0 926 048
- EP-A- 1 184 263
- DE-A- 10 026 393
- FR-A- 2 800 695
- FR-A- 2 813 273
- FR-A- 2 814 426

## Description

### DOMAINE TECHNIQUE

La présente invention se rapporte au domaine des structures pour véhicule automobile, du type comprenant un châssis comportant un berceau, ainsi que des moyens de protection annexes au châssis placés par exemple en dessous du groupe moteur du véhicule, les moyens de protection comportant au moins un longeron muni de moyens d'engagement à une extrémité, la structure étant prévue pour renforcer la sécurité des passagers en cas de choc sur le véhicule.

L'invention concerne également les véhicules automobiles équipés d'une telle structure.

### ETAT DE LA TECHNIQUE ANTERIEURE

Dans ce domaine technique, plusieurs réalisations ont déjà été proposées.

Parmi ces réalisations, on connaît une structure pour véhicule comprenant un châssis comportant un berceau, ainsi que des moyens de protection annexes au châssis comportant deux longerons dont les extrémités avant sont reliées par un élément de liaison du type traverse. Dans cette réalisation, le berceau est fixé aux autres éléments du châssis tels que des longerons principaux formant ossature du véhicule, tandis que les moyens de protection se situent en dessous du groupe moteur, à l'avant du véhicule.

Ainsi, le berceau et les moyens de protection constituant la structure sont prévus afin de préserver l'intégrité du véhicule en cas de choc sur l'avant du véhicule provoquant le déplacement des moyens de protection en direction du berceau, et disposent chacun d'une fonction distincte déterminée. En effet, le berceau, directement relié aux longerons principaux de l'ossature du véhicule, participe à la protection de l'habitacle en cas de choc. En revanche, les moyens de protection sont agencés pour protéger le groupe moteur, ainsi que pour éviter l'intrusion de certains éléments du groupe moteur à l'intérieur de l'habitacle, ce qui aurait pour effet d'accentuer les risques pour les personnes présentes à bord du véhicule.

Afin de renforcer la capacité d'absorption des chocs du véhicule et plus particulièrement de la partie du véhicule comportant le groupe moteur, les moyens de protection de la structure comprennent des longerons sensiblement indéformables, disposés de manière à prendre appui par leur extrémités arrière sur le berceau en cas de choc. Cette disposition spécifique permet le passage des efforts en direction de l'ossature du véhicule, et se caractérise par un renforcement de la sécurité des personnes présentes dans le véhicule en cas de choc.

Un exemple de cette structure est divulguée dans le document FR-A-2814426, dont la description contre les caractéristiques du préambule de la revendication 1.

Néanmoins, dans une telle structure, l'assemblage des moyens de protection avec le berceau est soumis à une contrainte importante. En effet, les longerons composant les moyens de protection ne doivent pas être en contact avec le berceau de la structure, afin de ne pas créer de voie de passage acoustique.

Dans la réalisation de l'art antérieur mentionnée ci-dessus, les longerons des moyens de protection sont agencés de manière à ne pas être en contact avec le berceau, et à être maintenus à proximité de ce dernier. De plus, chaque longeron est muni d'un pion à son extrémité la plus proche du berceau, qui traverse, sans le contacter, un alésage prévu sur une plaque solidaire du berceau, cet alésage étant de diamètre largement plus important que le diamètre du pion.

En cas de choc avant sur la structure provoquant le déplacement des moyens de protection en direction du berceau, les moyens de protection entrent en contact avec le berceau par l'intermédiaire de deux plaques d'appui situées respectivement sur les longerons et sur le berceau. Notons que les plaques d'appui sont notamment prévues pour stopper la course des moyens de protection par rapport au berceau du châssis du véhicule.

Cependant, lors de la réalisation de simulations de chocs, il a été observé que les longerons des moyens de protection ne permettaient pas toujours de transmettre les efforts en direction du châssis du véhicule, en raison de leur échappement du berceau durant le choc. En effet, les pions prévus à l'extrémité des longerons sont parfois insuffisants pour maintenir l'appui entre les différents éléments de la structure, ne pouvant ainsi empêcher l'extraction des longerons du berceau. Cette contrainte d'échappement altère bien entendu fortement la sécurité des personnes pouvant se trouver à bord du véhicule, et n'est en aucun cas compatible avec les exigences toujours croissantes des normes de sécurité relatives aux véhicules automobiles.

### EXPOSÉ DE L'INVENTION

L'invention a donc pour but de proposer une structure pour véhicule automobile, la structure comprenant un châssis comportant un berceau, ainsi que des moyens de protection annexes au châssis comportant au moins un longeron muni de moyens d'engagement à une extrémité, la structure remédiant au moins partiellement aux inconvénients relatifs aux réalisations de l'art antérieur.

Plus particulièrement, le but de la présente invention est de proposer une structure pour véhicule ayant une capacité d'absorption des chocs renforcée, notamment pour des chocs provoquant le déplacement des moyens de protection en direction du berceau.

En outre, l'invention a pour but de présenter un véhicule automobile équipé d'une telle structure.

Pour ce faire, l'invention a tout d'abord pour objet une structure pour véhicule automobile, la structure comprenant un châssis comportant un berceau, ainsi que des moyens de protection annexes au châssis comportant au moins un longeron muni de moyens d'engagement à une extrémité. Chaque longeron est positionné de sorte que les moyens d'engagement sont situés à proximité du berceau, et aptes à entrer en contact avec celui-ci lors d'un choc sur la structure du véhicule provoquant le déplacement des moyens de protection en direction du berceau. Selon l'invention, pour chaque longeron, lors du choc sur la structure du véhicule, les moyens d'engagement s'engagent dans des moyens de guidage complémentaires appartenant au berceau.

Avantageusement, la configuration spécifique proposée dans la structure selon l'invention permet d'éviter l'échappement des longerons du berceau durant le choc du véhicule. De cette manière, il est possible d'assurer le transfert des efforts depuis les longerons des moyens de protection en direction du berceau appartenant au châssis du véhicule, pendant toute la durée du choc.

La sécurité globale du véhicule est alors renforcée, et les risques d'intrusion d'éléments du groupe moteur à l'intérieur de l'habitacle du véhicule sont amoindris.

En effet, lors d'analyses effectuées pendant la réalisation de simulations de chocs sur la structure décrite de l'art antérieur, il a été observé que pendant les premiers instants suivant le choc sur la structure, les moyens de protection se déplaçaient en direction du berceau jusqu'au contact entre les plaques d'appui prévues sur chacun de ces éléments.

De plus, en analysant le comportement de cette même structure, il a été remarqué qu'immédiatement après le contact entre les plaques d'appui, les longerons des moyens de protection étaient chacun animés d'un mouvement complexe de rotations par rapport au berceau, entraînant successivement la déstabilisation ainsi que le rupture de la liaison entre le longeron et le berceau, le pion et l'alésage prévus dans l'art antérieur n'étant alors plus satisfaisants pour maintenir le longeron et le berceau en contact.

Dans la structure selon l'invention, chaque longeron dispose à son extrémité de moyens d'engagement conçus pour coopérer avec des moyens de guidage complémentaires prévus sur le berceau. Ainsi, lors d'un choc sur la structure du véhicule, les moyens d'engagement s'engagent progressivement dans les moyens de guidage complémentaires, jusqu'au contact entre les plaques d'appui respectives des moyens de protection et du berceau. Une fois le contact obtenu, l'emboîtement entre les moyens d'engagement et les moyens de guidage complémentaires est réalisé, interdisant par conséquent tout mouvement postérieur entre les longerons et le berceau du châssis du véhicule, dont notamment les mouvements de rotation. De cette manière, le transfert des efforts en direction du châssis est assuré durant l'intégralité du choc. Cette caractéristique spécifique est obtenue en raison de la coopération particulière entre les moyens d'engagement et les moyens de guidage complémentaires, formant une liaison insensible aux différents mouvements de rotations entre les longerons et le berceau, après l'entrée en contact de leurs plaques d'appui respectives.

Selon un mode de réalisation préféré de la présente invention, pour chaque longeron, les moyens d'engagement et les moyens de guidage complémentaires sont aptes à établir une liaison d'encastrement. De façon avantageuse, les liaisons entre les moyens d'engagement et les moyens de guidage complémentaires sont davantage renforcées, permettant par conséquent une sécurité supplémentaire pour le maintien des longerons des moyens de protection sur le berceau du châssis.

Préférentiellement, pour chaque longeron, les moyens d'engagement comprennent au moins un alésage, et les moyens de guidage complémentaires comprennent au moins un pion destiné à coopérer avec au moins un alésage des moyens d'engagement. Dans un tel cas, on peut alors prévoir que les moyens d'engagement comprennent un premier et un second alésages espacés l'un de l'autre et de diamètres respectifs d₁ et d₂, et que les moyens de guidage complémentaires comprennent un pion comportant une première et une seconde portions cylindriques de diamètres respectifs d₁ et d₂, les première et seconde portions cylindriques étant respectivement destinées à coopérer avec les premier et second alésages.

De manière préférée, pour chaque longeron, la première portion cylindrique du pion des moyens de guidage complémentaires se situe entre le premier et le second alésages des moyens d'engagement. De plus, le pion traverse le second alésage sans être en contact avec celui-ci. De cette façon, les pions des moyens de guidage complémentaires se situent à proximité des alésages sans être en contact avec ceux-ci, cet agencement particulier facilitant grandement leur engagement lors d'un choc sur la structure, sans créer de voie de passage acoustique..

De façon préférentielle, lors du choc sur la structure du véhicule, pour chaque longeron, le mouvement des moyens d'engagement par rapport aux moyens de guidage complémentaires est stoppé à l'aide d'une première et d'une seconde plaques d'appui, respectivement situées sur le longeron et sur le berceau.

Enfin, on peut prévoir que les moyens de protection comprennent deux longerons disposés sensiblement parallèlement l'un à l'autre et reliés entre eux au moyen d'un élément de liaison, et qu'ils sont reliés au berceau par l'intermédiaire de bras.

D'autre part, l'invention a également pour objet un véhicule automobile comportant une structure telle que celle décrite ci-dessus.

D'autres avantages et caractéristiques de l'invention apparaîtront dans la description détaillée, non limitative, ci-dessous.

### BRÈVE DESCRIPTION DES DESSINS

Cette description sera faite au regard des dessins annexés parmi lesquels :
- la figure 1 représente une vue en perspective d'une structure pour véhicule automobile selon un mode de réalisation préféré de l'invention ;
- la figure 2 représente une vue partielle en coupe d'un assemblage mis en oeuvre sur la structure de la figure 1, entre un longeron des moyens de protection et le berceau du châssis, avant un choc sur cette structure ;
- la figure 3 représente une vue partielle en coupe d'un assemblage mis en oeuvre sur la structure de la figure 1, entre un longeron des moyens de protection et le berceau du châssis, après un choc sur cette structure.

### EXPOSÉ DÉTAILLÉ D'UN MODE DE RÉALISATION PRÉFÉRÉ

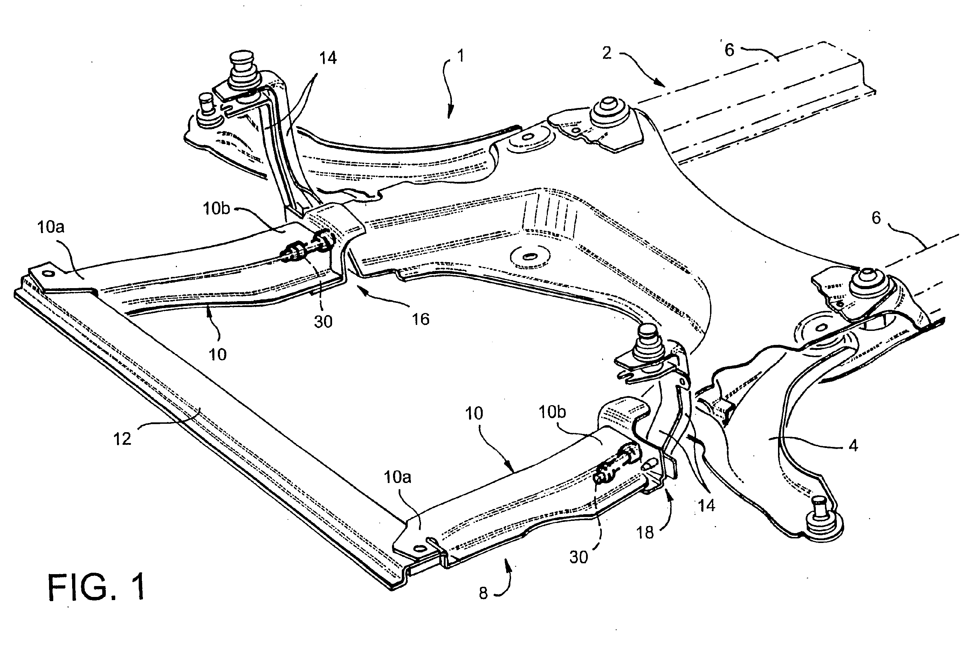

En référence à la figure 1, il est représenté une structure 1 pour un véhicule automobile (non représenté) selon un mode de réalisation préféré de la présente invention. La structure 1 comprend un châssis 2 comportant un berceau 4, ainsi que des longerons principaux 6 formant ossature du véhicule.

La structure 1 comprend également des moyens de protection 8, comportant de préférence deux longerons 10 disposés parallèlement, et reliés entre eux, à leurs extrémités avant 10a, par l'intermédiaire d'un élément de liaison 12 du type traverse. Les éléments 10,12 cités ci-dessus sont conçus de façon à être sensiblement indéformables, en cas de choc sur le véhicule.

Dans ce mode de réalisation préféré, les moyens de protection 8 sont situés à l'avant du véhicule, et sont principalement destinés à protéger un groupe moteur (non représenté) du véhicule. Le châssis 2 muni du berceau 4 est prévu pour assurer la sécurité de l'habitacle (non représenté) du véhicule. Il est disposé de manière à être à proximité des moyens de protection 8.

Les moyens de protection 8 sont reliés au berceau 4 du châssis 2 au moyen de bras 14, maintenant les extrémités arrière 10b les longerons 10 à proximité du berceau 4, sans être en contact avec celui-ci.

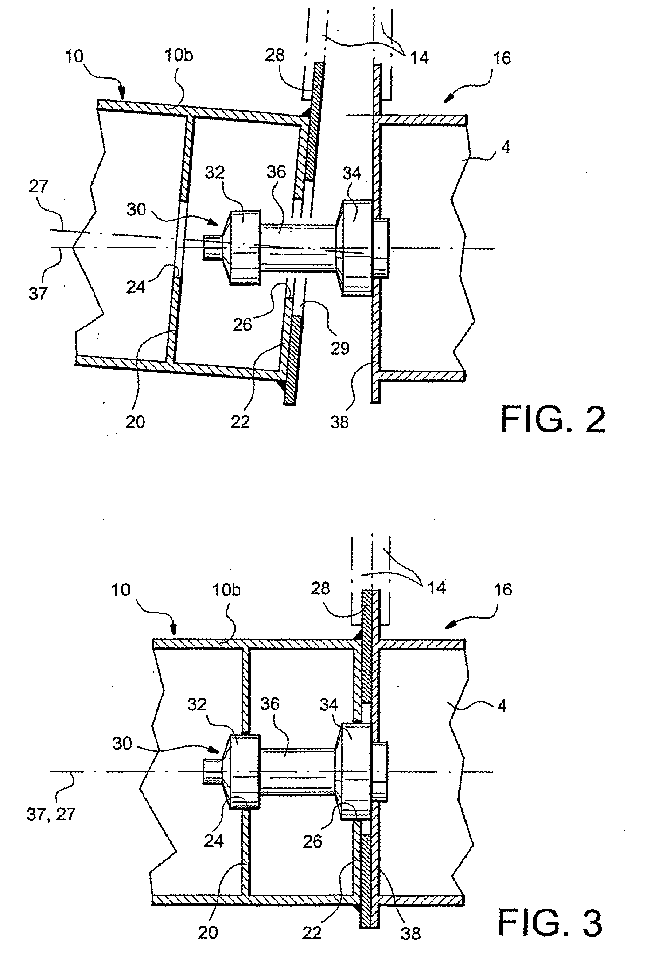

En référence à la figure 2, il est représenté une vue partielle en coupe d'un assemblage 16 mis en oeuvre sur la structure 1 de la figure 1, entre l'extrémité arrière 10b du longeron 10 des moyens de protection 8, et le berceau 4 du châssis 2. Notons que le second assemblage 18 prévu sur la structure 1 est identique à l'assemblage 16, et ne sera donc pas davantage décrit.

Comme on peut le voir sur cette figure, le longeron 10 comporte à son extrémité 10b, celle se situant à proximité du berceau 4, une première 20 et une seconde plaques 22 espacées l'une de l'autre, disposées sensiblement perpendiculairement à l'axe des longerons 10. Les plaques 20 et 22 sont traversées respectivement par un premier alésage 24 et par un second alésage 26 constituant les moyens d'engagement, dont l'axe 27 est confondu avec l'axe du longeron 10. Par ailleurs, une première plaque d'appui 28 est montée à l'extrémité 10b du longeron 10, perpendiculairement à l'axe du longeron 10. Notons que la première plaque d'appui 28 comporte un passage 29 de diamètre supérieur aux diamètres des alésages 24 et 26.

Le berceau 4 comprend des moyens de guidage complémentaires aux moyens d'engagement 24,26, ces moyens de guidage complémentaires étant essentiellement composés d'un pion 30, comportant une première portion cylindrique 32 et une seconde portion cylindrique 34, espacées l'une de l'autre et reliées entre elles par une troisième portion cylindrique 36 de diamètre inférieur. Notons que les première 32, seconde 36, et troisième portions cylindriques 34 ont un axe commun 37 sensiblement horizontal. L'axe 27 des alésages 24 et 26 prévus sur les moyens d'engagement coupe l'axe 37, et est légèrement incliné vers le bas en allant vers l'arrière. D'autre part, une seconde plaque d'appui 38 est montée sur le berceau 4, sensiblement perpendiculairement à l'axe 37, à proximité de la première plaque d'appui 28 montée sur le longeron 10.

Notons à titre indicatif qu'il serait possible de prévoir le pion 30 sur les longerons 20 et les alésages 24,26 sur le berceau 4, tout comme il serait également envisageable de prévoir une pluralité de pions 30 par assemblage 16.

Lorsque les moyens de protection 8 et le berceau 4 sont assemblés par l'intermédiaire des bras 14, la première portion cylindrique 32, de diamètre d₁ identique au diamètre du premier alésage 24, se situe entre les première et seconde plaques 20 et 22, portant les premier et second alésages 24 et 26. La troisième portion cylindrique 36, de diamètre inférieur au diamètre d₂ correspondant au diamètre du second alésage 26 et au diamètre de la seconde portion cylindrique 34, traverse le second alésage 26 et le passage 29 de la première plaque d'appui 28, sans être en contact avec ceux-ci. Ainsi, dans cette configuration d'avant choc, on évite de créer une voie de passage acoustique entre les longerons 10 des moyens de protection 8, et le berceau 4 du châssis 2.

Lors d'un choc sur la structure 1 provoquant le déplacement des moyens de protection 8 en direction du berceau 4, chaque longeron 10 se déplace en direction du berceau 4, sous l'effet du choc survenu au niveau de l'élément de liaison 12 des moyens de protection 8. Notons que pendant le déplacement des longerons 10 en direction du berceau 4, les longerons 10 se redressent sensiblement, jusqu'à avoir l'axe 27 des alésages 24 et 26 confondu avec l'axe 37 des pions 30.

Ainsi, quelques instants après le début du choc, les moyens d'engagement 24,26 s'engagent dans les moyens de guidage complémentaires 30,32,34. En effet, de façon simultanée, le premier alésage 24 s'emboîte dans la première portion cylindrique 32 de même diamètre d₁, tandis que le second alésage 26 s'emboîte dans la seconde portion cylindrique 34 de même diamètre d₂, supérieur à d₁.

Durant le choc, en référence à la figure 3, le mouvement des longerons 10 par rapport au berceau 4 est stoppé à l'aide des première et seconde plaques d'appui 28 et 38. Les plaques d'appui 28 et 38 sont initialement disposées de manière à ce que lorsqu'elles entrent en contact et qu'elles stoppent le mouvement relatif des longerons 10 par rapport au berceau 4, les première et seconde portions cylindriques 32 et 34 se situent respectivement dans les premier et second alésages 24 et 26. De cette façon, aucun mouvement ultérieur n'est autorisé entre les longerons 10 et le berceau 4, cette caractéristique assurant par conséquent le passage des efforts provenant du choc en direction du berceau 4 appartenant au châssis 2, pendant toute la durée de ce choc. Dans le mode de réalisation préféré présenté, les moyens de guidage complémentaires 30,32,34 disposent d'un pion 30 muni de deux portions cylindriques 32 et 34 espacées l'une de l'autre, afin d'éviter les mouvements de rotation des longerons 10 par rapport au berceau 4, selon des axes perpendiculaires aux axes dés longerons 10. Néanmoins, une autre possibilité pour les moyens d'engagement et les moyens de guidage complémentaires peut consister en une seule portion cylindrique, coopérant avec un seul alésage. Dans un tel cas, il est alors nécessaire de dimensionner l'alésage et la portion cylindrique de telle sorte que la longueur sur laquelle ils sont en contact est suffisamment importante pour interdire les mouvements de rotation selon des axes perpendiculaires aux axes des longerons 10.

Il est également précisé que la liaison obtenue entre les moyens d'engagement 24,26 et les moyens de guidage complémentaires 30,32,34 peut être une liaison d'encastrement. Pour se prévaloir d'un tel type de liaison, les diamètres des premier et second alésages 24,26 et des première et seconde portions cylindriques 32,34 doivent être ajustés en conséquence. De cette manière, les risques de mouvement de rotation entre les longerons 10 et le berceau 4, par exemple selon un axe parallèle à l'axe des longerons 10, sont fortement diminués.

Bien entendu, diverses modifications peuvent être apportées par l'homme du métier à la structure 1 et au véhicule automobile qui viennent d'être décrits, uniquement à titre d'exemples non limitatifs.

## Revendications

1. Structure (1) pour véhicule automobile, la structure (1) comprenant un châssis (2) comportant un berceau (4), ainsi que des moyens de protection (8) annexes au châssis (2) comportant au moins un longeron (10) muni de moyens d'engagement (24,26) à une extrémité (10b), chaque longeron (10) étant positionné de sorte que les moyens d'engagement (24,26) sont situés à proximité dudit berceau (4) et aptes à entrer en contact avec celui-ci lors d'un choc sur la structure (1) provoquant le déplacement des moyens de protection (8) en direction du berceau (4), **caractérisée en ce que** pour chaque longeron (10), lors dudit choc sur la structure (1) du véhicule, les moyens d'engagement (24,26) s'engagent dans des moyens de guidage complémentaires (30,32,34) appartenant audit berceau (4).

2. Structure (1) selon la revendication 1, **caractérisée en ce que** pour chaque longeron (10), les moyens d'engagement (24,26) et les moyens de guidage complémentaires (30,32,34) sont aptes à établir une liaison d'encastrement.

3. Structure (1) selon la revendication 1 ou la revendication 2, **caractérisée en ce que** pour chaque longeron (10), les moyens d'engagement (24,26) comprennent au moins un alésage, et **en ce que** les moyens de guidage complémentaires (30,32,34) comprennent au moins un pion (30) destiné à coopérer avec au moins un alésage des moyens d'engagement (24,26).

4. Structure (1) selon la revendication 3, **caractérisée en ce que** pour chaque longeron (10), les moyens d'engagement (24,26) comprennent un premier (24) et un second alésages (26) espacés l'un de l'autre et de diamètres respectifs d₁ et d₂, et **en ce que** les moyens de guidage complémentaires (30,32,34) comprennent un pion (30) comportant une première (32) et une seconde portions cylindriques (34) de diamètres respectifs d₁ et d₂, lesdites première (32) et seconde portions cylindriques (34) étant respectivement destinées à coopérer avec lesdits premier (24) et second alésages (26).

5. Structure (1) selon la revendication 4, **caractérisée en ce que** les moyens de protection (8) et le berceau (4) sont positionnés de manière à ce que pour chaque longeron (10), la première portion cylindrique (32) du pion (30) des moyens de guidage complémentaires (30,32,34) se situe entre le premier (24) et le second alésages (26) des moyens d'engagement (24,26), et **en ce que** le pion (30) traverse ledit second alésage (26) sans être en contact avec celui-ci.

6. Structure (1) selon l'une quelconque des revendications précédentes, **caractérisée en ce que** lors dudit choc sur la structure (1) du véhicule, pour chaque longeron (10), le mouvement des moyens d'engagement (24,26) par rapport aux moyens de guidage complémentaires (30,32,34) est stoppé à l'aide d'une première (28) et d'une seconde plaques d'appui (38), respectivement situées sur le longeron (10) et sur le berceau (4).

7. Structure (1) selon l'une quelconque des revendications précédentes, **caractérisée en ce que** les moyens de protection (8) comprennent deux longerons (10) disposés sensiblement parallèlement l'un à l'autre et reliés entre eux au moyen d'un élément de liaison (12).

8. Structure (1) selon l'une quelconque des revendications précédentes, **caractérisée en ce que** les moyens de protection (8) sont reliés au berceau (4) par l'intermédiaire de bras (14).

9. Structure (1) selon l'une quelconque des revendications précédentes, **caractérisée en ce que** les moyens de protection (8) sont aptes à protéger un groupe moteur du véhicule.

10. Véhicule automobile, **caractérisé en ce qu'**il comporte une structure (1) selon l'une quelconque des revendications précédentes.

## Claims

1. Structure (1) for a motor vehicle, the structure (1) comprising a chassis (2) including an engine sub-frame (4), and protective means (8) attached to the chassis (2) including at least one side member (10) provided with engaging means (24, 26) at one end (10b), each side member (10) being positioned so that the engaging means (24, 26) are located near the said engine sub-frame (4) and arranged to come in contact with it in the event of an impact on the structure (1) causing the displacement of the protective means (8) in the direction of the engine sub-frame (4), **characterized in that** for each side member (10), in the event of the said impact on the structure (1) of the vehicle, the engaging means (24, 26) engage with complementary guiding means (30, 32, 34) which are part of the said engine sub-frame (4).

2. Structure (1) according to Claim 1, **characterized in that** for each side member (10), the engaging means (24, 26) and the complementary guiding means (30, 32, 34) are arranged to establish a tight-fitting connection.

3. Structure (1) according to Claim 1 or Claim 2, **characterized in that** for each side member (10), the engaging means (24, 26) comprise at least one hole, and **in that** the complementary guiding means (30, 32, 34) comprise at least one guide pin (30) intended to cooperate with at least one hole of the engaging means (24, 26).

4. Structure (1) according to Claim 3, **characterized in that** for each side member (10), the engaging means (24, 26) comprise first (24) and second holes (26) spaced one from the other and of respective diameters d₁ and d₂, and **in that** the complementary guiding means (30, 32, 34) comprise a guide pin (30) including first (32) and second cylindrical portions (34) of respective diameters d₁ and d₂, the said first (32) and second cylindrical portions (34) being respectively intended to cooperate with the said first (24) and second holes (26).

5. Structure (1) according to Claim 4, **characterized in that** the protective means (8) and the engine sub-frame (4) are positioned so that for each side member (10), the first cylindrical portion (32) of the guide pin (30) of the complementary guiding means (30, 32, 34) is located between the first (24) and the second holes (26) of the engaging means (24, 26), and **in that** the guide pin (30) passes through the said second hole (26) without being in contact with it.

6. Structure (1) according to any one of the preceding claims, **characterized in that** in the event of the said impact on the structure (1) of the vehicle, for each side member (10), the movement of the engaging means (24, 26) in relation to the complementary guiding means (30, 32, 34) is stopped by means of first (28) and second contact plates (38), located respectively on the side member (10) and on the engine sub-frame (4).

7. Structure (1) according to any one of the preceding claims, **characterized in that** the protective means (8) comprise two side members (10) disposed generally parallel one to the other and connected together by means of a connecting element (12).

8. Structure (1) according to any one of the preceding claims, **characterized in that** the protective means (8) are connected to the engine sub-frame (4) via arms (14).

9. Structure (1) according to any one of the preceding claims, **characterized in that** the protective means (8) are arranged to protect an engine unit of the vehicle.

10. Motor vehicle, **characterized in that** it includes a structure (1) according to any one of the preceding claims.

## Patentansprüche

1. Struktur (1) für ein Kraftfahrzeug, wobei die Struktur (1) ein Fahrgestell (2) mit einer Halterung (4) sowie an das Fahrgestell (2) angebaute Schutzmittel (8) aufweist, die mindestens einem Längsträger (10) aufweisen, der an einem Ende (10b) mit Eingriffmitteln (24, 26) versehen ist, wobei jeder Längsträger (10) so positioniert ist, dass die Eingriffmittel (24, 26) sich in der Nähe der Halterung (4) befinden und in der Lage sind, bei einem Stoß auf die Struktur (1), der die Verschiebung der Schutzmittel (8) in Richtung der Halterung (4) bewirkt, mit dieser in Kontakt zu kommen, **dadurch gekennzeichnet, dass** für jeden Längsträger (10) bei dem Stoß auf die Struktur (1) des Fahrzeugs die Eingriffmittel (24, 26) in komplementäre Führungsmittel (30, 32, 34) eingreifen, die zur Halterung (4) gehören.

2. Struktur (1) nach Anspruch 1, **dadurch gekennzeichnet, dass** für jeden Längsträger (10) die Eingriffmittel (24, 26) und die zusätzlichen Führungsmittel (30, 32, 34) in der Lage sind, eine Einsteckverbindung herzustellen.

3. Struktur (1) nach Anspruch 1 oder Anspruch 2, **dadurch gekennzeichnet, dass** für jeden Längsträger (10) die Eingriffmittel (24, 26) mindestens eine Bohrung aufweisen, und dass die komplementären Führungsmittel (30, 32, 34) mindestens einen Zapfen (30) aufweisen, der dazu bestimmt ist, mit mindestens einer Bohrung der Eingriffmittel (24, 26) zusammenzuwirken.

4. Struktur (1) nach Anspruch 3, **dadurch gekennzeichnet, dass** für jeden Längsträger (10) die Eingriffmittel (24, 26) eine erste (24) und eine zweite Bohrung (26) aufweisen, die einen Abstand zueinander und Durchmesser d₁ bzw. d₂ haben, und dass die komplementären Führungsmittel (30, 32, 34) einen Zapfen (30) aufweisen, der einen ersten (32) und einen zweiten zylindrischen Abschnitt (34) mit den Durchmessern d₁ bzw. d₂ aufweist, wobei der erste (32) und der zweite zylindrische Abschnitt (34) dazu bestimmt sind, mit der ersten (24) bzw. zweiten Bohrung (26) zusammenzuwirken.

5. Struktur (1) nach Anspruch 4, **dadurch gekennzeichnet, dass** die Schutzmittel (8) und die Halterung (4) so positioniert sind, dass für jeden Längsträger (10) der erste zylindrische Abschnitt (32) des Zapfens (30) der komplementären Führungsmittel (30, 32, 34) sich zwischen der ersten (24) und der zweiten Bohrung (26) der Eingriffmittel (24, 26) befindet, und dass der Zapfen (30) die zweite Bohrung (26) durchquert, ohne mit ihr in Kontakt zu sein.

6. Struktur (1) nach einem der vorhergehenden Ansprüche, **dadurch gekennzeichnet, dass** bei dem Stoß auf die Struktur (1) des Fahrzeugs für jeden Längsträger (10) die Bewegung der Eingriffmittel (24, 26) bezüglich der komplementären Führungsmittel (30, 32, 34) mit Hilfe einer ersten (28) und einer zweiten Auflageplatte (38) angehalten wird, die sich auf dem Längsträger (10) bzw. auf der Halterung (4) befinden.

7. Struktur (1) nach einem der vorhergehenden Ansprüche, **dadurch gekennzeichnet, dass** die Schutzmittel (8) zwei Längsträger (10) aufweisen, die im Wesentlichen parallel zueinander angeordnet und miteinander mit Hilfe eines Verbindungselements (12) verbunden sind.

8. Struktur (1) nach einem der vorhergehenden Ansprüche, **dadurch gekennzeichnet, dass** die Schutzmittel (8) mit der Halterung (4) über Arme (14) verbunden sind.

9. Struktur (1) nach einem der vorhergehenden Ansprüche, **dadurch gekennzeichnet, dass** die Schutzmittel (8) in der Lage sind, einen Motorblock des Fahrzeugs zu schützen.

10. Kraftfahrzeug, **dadurch gekennzeichnet, dass** es eine Struktur (1) nach einem der vorhergehenden Ansprüche aufweist.
